Europäisches Patentamt

European Patent Office

Office européen des brevets

(19)

(11) Numéro de publication : **0 060 160 B1**

(12)

# FASCICULE DE BREVET EUROPÉEN

(45) Date de publication du fascicule du brevet :
**15.05.85**

(51) Int. Cl.⁴ : **G 01 N 21/89**

(21) Numéro de dépôt : **82400257.0**

(22) Date de dépôt : **15.02.82**

(54) **Procédé pour la recherche des défauts des feuilles de verre et dispositif mettant en œuvre ce procédé.**

(30) Priorité : **25.02.81 FR 8104139**

(43) Date de publication de la demande :
**15.09.82 Bulletin 82/37**

(45) Mention de la délivrance du brevet :
**15.05.85 Bulletin 85/20**

(84) Etats contractants désignés :
**AT BE CH DE GB IT LI LU NL SE**

(56) Documents cités :
**FR-A- 1 568 882**
**US-A- 3 533 706**
**US-A- 3 814 946**
**US-A- 3 932 042**

(73) Titulaire : **CEM COMPAGNIE ELECTRO-MECANIQUE**
**12, rue Portalis**
**F-75008 Paris (FR)**

(72) Inventeur : **Leser, Jacques François**
**Parc du Belvédère Rue Marius Carrieu**
**F-34000 Montpellier (FR)**

(74) Mandataire : **Ecal, François**
**4, rue Fabrégat**
**F-34500 Béziers (FR)**

Jouve, 18, rue St-Denis, 75001 Paris, France

## Description

La présente invention a pour objet un procédé pour le contrôle du verre en feuille défilant en continu ou en tronçons séparés en vue de déceler les défauts, mêmes minimes, qu'il peut comporter sans que soient pris en compte les corps étrangers ou souillures qui peuvent se trouver à sa surface mais qui n'affectent pas sa planéité et peuvent être supprimés par simple lavage et dispositif mettant en œuvre ce procédé.

Des procédés sont connus ainsi que les dispositifs les mettant en œuvre qui permettent dans certaines conditions de détecter les défauts présentés par la surface d'une pellicule souple telle qu'une pellicule photographique.

Le but recherché dans ce cas impose la détection de tous les défauts du support ou de l'émulsion qui y est couchée aussi bien que de toutes les souillures ou de tous les corps étrangers qui sont à sa surface, du fait de la difficulté de les éliminer par simple lavage que l'émulsion ne supporterait pas ce qui implique de considérer comme un défaut tout ce qui peut altérer la pureté de la surface de la pellicule contrôlée.

Il en est tout autrement du contrôle du verre au cours de sa fabrication par le procédé, par exemple, de flottation sur un bain d'étain fondu dénommé « float glass ». Dans ce cas en effet seuls les défauts de la matière elle-même : bulles, larmes, inclusions, projections d'étain par exemple, sont à détecter parce qu'ils altèrent la planéité et la transparence du verre. Tandis qu'il est inutile de détecter les simples saletés, de quelque nature qu'elles soient, qui peuvent se trouver déposées à sa surface puisqu'un simple lavage suffit à les éliminer, alors que leur détection au même titre qu'un défaut ferait rejeter une portion de verre parfaitement utilisable.

Il est donc indispensable dans ce cas de procéder à une détection finement sélective capable d'effectuer une discrimination parfaite entre les défauts de la matière et les saletés que sa surface porte.

En outre ces procédés connus utilisent généralement un rayon laser amené à balayer cycliquement la surface du verre par réflexion sur un assemblage de miroirs tournants ou oscillants.

De tels procédés comportent donc des éléments mécaniques qui sont source d'imperfection et particulièrement rendent difficile la parfaite synchronisation du balayage optique du rayon laser et de la vitesse de défilement de la surface du verre quand celle-ci doit être modifiée. Ce qui impose une vitesse constante qui constitue une sujétion qui peut être un inconvénient.

Enfin le coût d'exploitation des dispositifs mettant en œuvre de tels procédés est élevé du fait même du coût de la source des rayons laser qui en outre dans une usine de fabrication de verre est soumise à de forts risques de détérioration.

Ces inconvénients sont le fait entre autres du dispositif décrit dans FR-A-2.238.930 ainsi que des brevets antérieurs cités dans ce dernier.

De même la plupart de tels dispositifs connus exigent un étalonnage fréquent du fait des variations qui peuvent survenir dans l'intensité de la source lumineuse aussi bien que dans la réflexibilité des miroirs de balayage tournants ou oscillants qui peuvent se charger rapidement d'impuretés ou même du fait de la simple variation d'épaisseur du verre d'un type de fabrication à l'autre ou de sa réfringence aussi bien que de sa teinte. Un tel étalonnage est de fait nécessaire pratiquement à chaque balayage ce qui entraîne une plus grande complexité du système automatique de pilotage, donc son renchérissement.

Enfin, en ce qui concerne les dispositifs qui travaillent par réflexion sur la feuille de verre à contrôler on constate qu'ils sont impropres au contrôle du verre en feuille continue. En effet la longueur de la bande dans ce cas est telle ainsi que les tensions qu'elle subit que sa surface est presque continuellement soumise à des vibrations qui seraient la cause d'une réponse aberrante du rayon réfléchi si de tels dispositifs étaient utilisés.

Selon certains autres procédés le rayonnement utilisé est le rayonnement infra-rouge. C'est le cas des dispositifs décrits dans FR-A-1.435.210 et FR-A-2.099.921, qui ne permettent aucun d'eux la sélection entre les défauts de la matière et les simples souillures qui n'adhèrent pas à sa surface, ce qui peut être satisfaisant et qui est même nécessaire dans le but poursuivi dans ces deux brevets dans lesquels il est proposé de contrôler la qualité des bandes photographiques, mais ne correspond pas au but ici recherché car cela entraînerait le rejet automatique de portions de verre simplement souillées mais parfaitement utilisables après un simple lavage.

Or il est remarquable de constater que dans chacun de ces cas la source lumineuse se trouve située dans le plan géométrique qui contient simultanément le défaut à déceler, l'axe optique du dispositif focalisateur et l'organe détecteur.

La déviation des rayons lumineux incidents, que ce soit par réflexion ou par réfraction, dûe à la déformation de la surface de la matière produite par un défaut qui la déforme si faiblement que ce soit provoque toujours dans chacun de ces cas un affaiblissement de la quantité de lumière normalement reçue par l'organe détecteur, cette déviation éloignant les rayons lumineux de l'axe optique du capteur sur lequel se trouve la source lumineuse. L'image du défaut sera donc toujours une tâche plus ou moins sombre se détachant sur un champ périphérique clair, ce que nous dénommerons le procédé de projection à « champ clair ».

On comprend donc que tout corps étranger qui se trouvera à la surface du verre se trouvera détecté de la même manière qu'un défaut de la matière elle-même.

Or, si une telle détection non sélective est recherchée dans le cas de contrôle des pellicules photographiques émulsionnées, il en est tout autrement pour le contrôle du verre pour lequel seuls les défauts de la matière sont à prendre en compte, de quelque nature qu'ils soient, y compris les inclusions même partielles de corps étrangers, mais à l'exclusion de toute souillure dûe à la présence de ces mêmes corps étrangers lorsqu'ils sont simplement posés à la surface du verre sans déformation de celui-ci donc susceptible d'être éliminés par simple lavage.

Il est en outre remarquable de constater que le contraste créé par une image sombre sur un fond clair est difficilement décelable, ce qui ne permet pas une grande finesse de détection.

Cette même impossibilité de discrimation des défauts du verre et des souillures qu'il porte à sa surface se retrouve aussi dans le dispositif décrit dans US-A-3.814.946 dans lequel une source lumineuse linéaire est focalisée, soumettant la feuille de verre à examiner à un éclairement linéaire intense qui provoque au contact d'un défaut de la matière la dispersion du faisceau lumineux par effet de réfraction et au contact d'une souillure opaque déposée sur la feuille de verre la même dispersion du faisceau lumineux par effet de diffraction à sa périphérie, ce qui a pour effet d'exciter des éléments détecteurs de lumière atteints par une partie des rayons lumineux ainsi dispersés, alors qu'ils ne reçoivent normalement aucune lumière étant maintenus obligatoirement hors de la trajectoire normale du faisceau lumineux focalisé, ce qui permet de comprendre que les éléments détecteurs sont excités de la même manière par une souillure déposée à la surface de la feuille de verre sans que celle-ci ait été déformée, aussi bien que par un défaut déformant la matière, ce qui constitue un inconvénient rédhibitoire quand la détection des défauts a pour but de détruire les portions du verre fabriqué qui en sont atteintes.

La présente invention a donc pour but d'atteindre ce résultat particulier nécessaire pour le contrôle des feuilles de verre au cours de leur fabrication en éliminant les inconvénients ci-dessus énumérés que présente chacun des procédés connus dans ce cas particulier où l'on recherche une méthode parfaitement sélective et qui permette de n'éliminer que les portions de verre fabriqué qui présentent de réels défauts de la matière, de quelque nature ou de quelques dimensions qu'ils soient, même les plus faibles, sans tenir compte des saletés superficielles qui ne marquent pas la surface du verre. Ce but est atteint par les caractéristiques des revendications 1, 3 et 5. Des modes particuliers de réalisation sont indiqués dans les revendications dépendantes.

Selon une caractéristique de la présente invention, la déviation des rayons lumineux provoquée par la présence d'un défaut qui affecte la surface du verre, et qui, comme il a été indiqué ci-dessus, diminue l'intensité de l'image donnée par l'optique de la source lumineuse qui est située dans son axe est ici au contraire utilisée pour provoquer un accroissement de lumière par rapport à l'image générale donnée de la même source, ce qui permet, comme on le comprend, et à l'inverse des autres procédés, de différencier les défauts de la matière des simples saletés déposées à sa surface et qui dans ce cas provoquent encore une réduction d'intensité lumineuse par simple occultation.

En effet nous avons vu que tout défaut de la matière, qu'il s'agisse de bulles, de bouillons, de larmes, ou d'inclusions même partielles, la matière présente à ce niveau, à sa surface, un défaut de planéité. Autrement dit on constate à ce niveau une déformation plus ou moins accentuée de la surface mais toujours existante. Le but de la présente invention est donc d'utiliser la déviation des rayons lumineux provoqués par le défaut de surface du verre pour rendre son image plus lumineuse encore que ne l'est l'image générale de la source lumineuse, cette déviation étant obtenue par l'effet de réfraction dans la masse du verre déformé, effet que ne peut provoquer une simple saleté.

Il est évidemment évité, dans ce but de discriminer les défauts des saletés, d'utiliser la déviation des rayons lumineux par diffraction communément utilisée dans le procédé dit de « champ noir » qui consiste à occulter la lumière au centre de l'optique de telle manière qu'aucun rayon ne pénètre directement dans ledit optique l'objet à observer étant seul éclairé de façon oblique par les rayons périphériques intenses qui sont alors diffractés par l'objet et pénètrent seuls dans l'optique formant une image claire de l'objet sur un fond noir.

Dans ce cas, il est manifeste que les défauts de surface provoqueraient une zone lumineuse sur fond noir qui de ce seul fait serait plus facilement décelable que l'image inverse précédemment décrite, par suite d'un meilleur contraste. Mais, indépendamment du fait qu'un tel procédé exige une intense lumière, on constate que les images de tous corps étrangers opaques qui constituent la généralité des saletés déposées à la surface du verre apparaîtraient aussi nimbées de lumière sur fond noir, ce qui provoquerait l'excitation de tout dispositif photosensible de la même manière qu'un défaut de surface, ce qui supprimerait toute sélectivité du procédé.

C'est pourquoi, selon une caractéristique de la présente invention, ce n'est pas à la diffraction qu'il est fait appel au niveau des défauts de surface du verre, mais à la réfraction qu'ils sont capables de provoquer au même titre qu'un prisme ou une lentille, pouvant être considérés généralement comme des lentilles asphériques gauches plus ou moins prononcées et dont l'axe optique est plus ou moins oglique.

Le procédé objet de la présente invention consiste donc bien, selon une caractéristique de l'invention, à utiliser la déviation du rayon lumineux incident due à la déformation de la surface de la matière produite par le défaut pur accroître la quantité de lumière normalement reçue par le capteur vers l'axe optique duquel cette déviation projette accidentellement des rayons lumineux qui ne sont normalement pas perçus, accroissement de lumière qui ne peut donc être en aucun cas provoqué par une simple saleté. Pour cela, il est utilisé un éclairage ponctuel de faible intensité placé, à l'inverse des procédés connus, en dehors mais à proximité du plan optique qui contient simultanément l'axe optique du dispositif focalisateur à l'extrémité duquel est situé l'organe de détection photosensible et le défaut éventuel à détecter qui y est amené au cours du défilement du verre.

De cette façon il est créé ce qui peut être appelé un « champ mixte » qui s'explique en rappelant que le « champ clair » est réalisé quand l'observateur, ou l'organe photosensible, et la source lumineuse sont sur le même axe optique qui contient aussi le défaut à observer qui apparaît comme une tache sombre sur fond clair, le défaut ayant réfracté la lumière hors du champ optique, ou l'ayant occultée s'il s'agit d'un corps étranger opaque, le résultat étant de manière identique une tache sombre sur un fond clair peu décelable et non sélective. Le « champ noir » qui suppose aussi l'alignement sur l'axe optique de l'observateur, de la source lumineuse et de l'objet est réalisé en n'éclairant l'objet qu'au moyen d'un faisceau périphérique intense qui est diffracté vers l'axe optique faisant apparaître de l'objet une image lumineuse sur fond noir, ce qui n'est pas non plus sélectif quoique plus contrasté.

Le « champ mixte » a donc pour effet de faire apparaître l'image d'un défaut de surface de la feuille du verre comme une image claire sur un fond sombre, sensiblement comme cela serait dans le cas du champ noir, mais non plus par un effet de diffraction mais par un effet de réfraction comme dans le cas du champ clair, ce qui a pour conséquence essentielle et nouvelle d'assurer la sélection des défauts de la matière et des saletés qui ne peuvent créer l'effet de réfraction recherché, différant donc en cela du champ noir, et a aussi pour conséquence d'assurer un contraste important dans la détection du défaut qui se traduit par une image brillante sur fond noir, différente en cela du résultat du champ clair.

Ce résultat est obtenu, selon le procédé objet de l'invention, en éloignant la source lumineuse ponctuelle et de faible intensité de l'axe optique du système de détection d'une valeur faible mais suffisante pour que le capteur se trouve aux limites de l'image qui est donnée dans son plan de la source lumineuse par le système optique, de sorte qu'en l'absence de toute déformation de la surface du verre, l'observateur ou l'organe photosensible substitué ne puisse recevoir que la frange limite de l'image de cette source lumineuse qui assure un niveau d'éclairement général faible, ce qui est appelé être aux limites du « champ clair ». On comprend alors que la moindre déviation des rayons lumineux provoquée par la réfraction due à la déformation interne ou superficielle du verre permet leur pénétration dans l'optique provoquant ainsi dans le plan du capteur une image d'une intensité lumineuse plus grande se détachant de façon parfaitement contrastée sur la frange sombre de l'image de la source lumineuse elle-même qui reste inchangée et à l'extérieur de laquelle apparaît l'image lumineuse du défaut.

On comprend de même que seuls les défauts du verre sont capables de créer la réfraction nécessaire pour former cette image lumineuse, les saletés ne pouvant donc apparaître que comme un obscurcissement plus profond du champ mixte, ce qui permet de les distinguer de façon stricte des défauts recherchés. Cette différenciation des saletés et des défauts est d'autant plus aisée que la source lumineuse est peu intense, ce qui supprime toute possibilité de diffraction au niveau de la périphérie des saletés.

Le procédé objet de l'invention permet donc d'obtenir la sélection recherchée tout en permettant une finesse de détection des défauts qui n'a pour limite que la sensibilité des organes photosensibles détecteurs.

Le dispositif mettant en œuvre le procédé objet de la présente invention comporte donc essentiellement une source lumineuse filiforme, pour intéresser toute la largeur de la bande examinée, placée sous la feuille de verre qui défile au-dessus d'elle. Ladite source constituée par un ou plusieurs tubes fluorescents par exemple installés bout à bout suivant la largeur de la feuille de verre à contrôler est placée transversalement par rapport au sens de défilement du verre, afin de l'éclairer sur toute sa largeur à travers une fine fente longitudinale pratiquée dans le coffre contenant lesdites sources lumineuses. Au-dessus du verre à contrôler est placé un dispositif optique focalisateur situé par rapport à la source lumineuse et à la feuille de verre de telle manière que l'une et l'autre soient situées au-delà de son foyer optique afin de former une image réelle nette de la surface du verre et de tout ce qu'elle supporte dans le plan où est placé un assemblage de photodiodes juxtaposées qui explorent ainsi de façon pratiquement continue la totalité de l'image ainsi formée.

Et, comme il a été dit, la source lumineuse est écartée de l'axe optique du système de la valeur juste suffisante pour que le réseau de photodiodes se trouve situé sur la frange extrême de son image et parallèle à celle-ci. De sorte qu'en l'absence de toute déformation de la surface du verre les photodiodes ne se trouvent que faiblement sollicitées, de façon uniforme, selon un seuil relativement bas dénommé « seuil lumière ». Par contre dès l'apparition d'une déformation quelconque de la surface du verre, même très faible, les rayons lumineux sont suffisamment déviés par réfraction pour que certains d'entre eux traversent le système optique formant ainsi une image lumineuse qui frappe certaines des photodiodes les sollicitant en un point très précis jusqu'à un seuil plus élevé dénommé « seuil-défaut », ce qui provoque l'émission d'un signal de coordonnées connues qui sera traité par un ensemble électronique qui gérera le système et émettra des ordres qui seront exploités en vue de l'élimination ou du simple marquage de la partie du verre atteinte par ce défaut.

Et on comprend qu'inversement une saleté qui ne déforme pas la surface du verre, qui ne constitue donc pas un défaut permanent, provoquera dans un tel système un affaiblissement plus important encore de l'intensité lumineuse de l'image reçue par le capteur qui passera en ce point en dessous du seuil-lumière normal, de sorte que le signal qui sera émis dans ce cas par l'une quelconque des photodiodes sera évidemment différent de celui provoqué par un défaut de la matière.

Les dessins annexés, donnés à titre d'exemple seulement, montrent un mode de réalisation du dispositif mettant en œuvre le procédé objet de l'invention dans le cas du contrôle d'une feuille de verre continue au cours de sa fabrication et dans le cas de feuilles de verre séparées circulant de façon continue ou non.

La figure 1 est le diagramme optique montrant le principe du procédé objet de l'invention.

Les figures 2A et 2B sont un diagramme optique simplifié du même principe présentant le cas du défaut et le cas de la saleté.

Les figures 3A et 3B sont la figuration du signal pouvant être observé sur un écran d'oscilloscope dans chacun des cas de défaut ou de saleté.

La figure 4 est une vue de l'image numérisée des défauts produits sur un écran-vidéo.

La figure 5 est un diagramme de l'intensité lumineuse au niveau du capteur.

La figure 6 est une matérialisation figurée de ce diagramme.

Les figures 7A et 7B sont la figuration des signaux vidéo intégrés et de l'information numérisée émise par le capteur.

La figure 8 est une vue schématique de l'organisation générale du dispositif mettant en œuvre le procédé objet de l'invention dans le cas du contrôle d'une feuille de verre continue.

La figure 9 est une vue schématique de l'image vue par un observateur d'un défaut ponctuel de la surface du verre selon le procédé objet de l'invention.

La figure 10 est une vue schématique de l'image vue par un observateur d'un défaut longiforme de la surface du verre selon le même procédé.

La figure 11 est constituée par la figuration des signaux intégrés émis par le capteur en fonction de la distance de la source lumineuse par rapport à l'axe optique du capteur et de son parallélisme par rapport au capteur lui-même, dans le cas d'une source lumineuse linéaire.

La figure 12 est une vue schématique en plan du dispositif permettant d'assurer la constance de la distance de la source lumineuse à l'axe optique du capteur et la constance du parallélisme de la source lumineuse linéaire par rapport audit capteur.

La figure 13 est une vue schématique cavalière du dispositif mettant en œuvre le procédé objet de l'invention dans le cas d'observation d'une bande de verre continue en cours de fabrication.

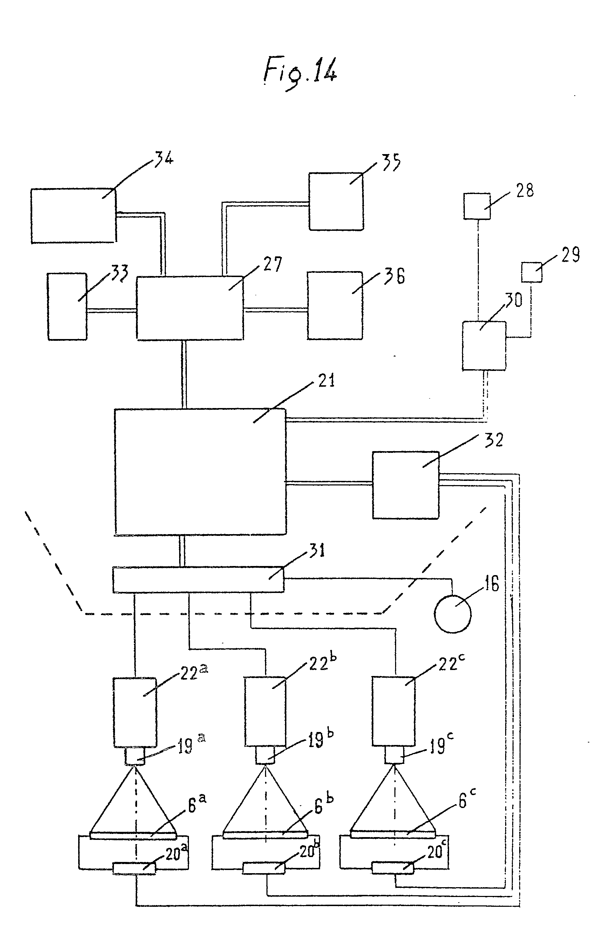

La figure 14 est une vue schématique de l'organigramme de l'ensemble électronique destiné à analyser les signaux émis par le capteur, à prendre les décisions nécessaires d'une part pour le maintien automatique des conditions optiques optimales de contrôle dans le cadre du procédé objet de l'invention et d'autre part pour la prise en compte, suivant les instructions mises en mémoire, d'un défaut détecté à l'exclusion des saletés, et en conséquence adresser les ordres correspondants d'une part aux dispositifs de contrôle de la source lumineuse et de sa position réciproque par rapport au capteur et d'autre part aux organes périphériques destinés à matérialiser le défaut constaté en vue de rejeter la portion de verre atteinte.

La figure 15 est une vue schématique de l'organigramme du capteur lui-même.

La figure 16 est une vue schématique de l'organisation générale du dispositif mettant en œuvre le procédé objet de l'invention dans le cas particulier le contrôle des feuilles de verre prédécoupées telles que des feuilles de verre destinées à la fabrication de pare-brise feuilletés ou trempés par exemple.

La figure 17 est une vue schématique cavalière du dispositif mettant en œuvre le procédé dans le cas ci-dessus.

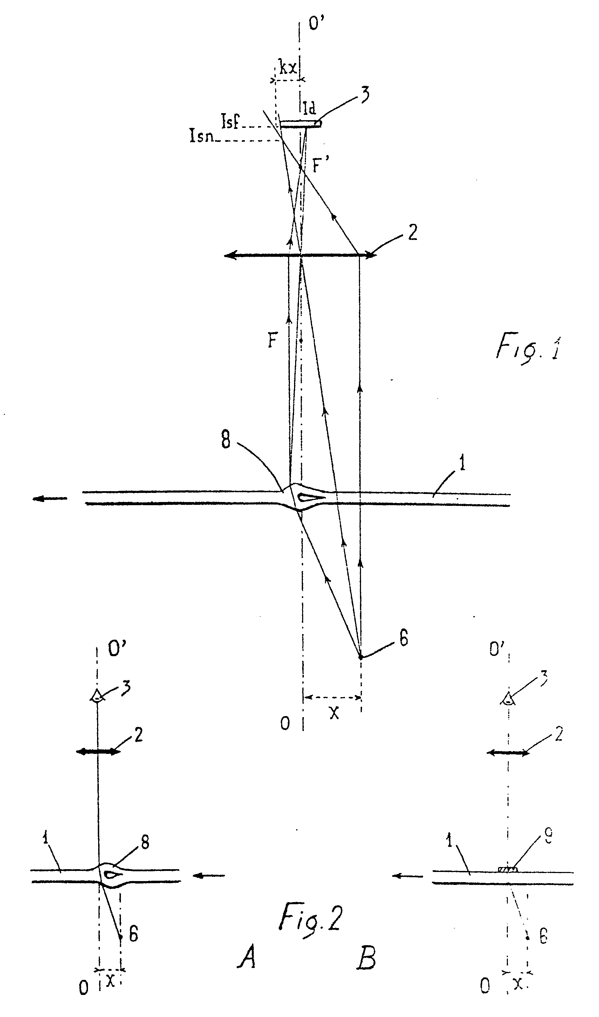

Comme on le voit sur la figure 1, le système optique convergent 2 étant situé entre le capteur photosensible 3 et la feuille de verre 1 qui est à contrôler, son axe $\dot{O}O'$, qui contient ledit capteur 3, est orthogonal au plan de ladite feuille de verre 1 qui défile en continu dans un plan situé au-delà du foyer (F) de l'objectif 2 de façon que l'image réelle Id que celui-ci donne de la feuille de verre 1 et des défauts ou saletés qu'elle porte se forme exactement dans le plan du capteur 3, la profondeur de champ de l'objectif étant suffisante pour que soient simultanément nettes dans ce même plan les images de chacune des faces de la feuille de verre, quelle qu'en soit l'épaisseur.

La source lumineuse 6 ponctuelle et de faible intensité est située en dessous du plan de la feuille de verre 1. On voit donc que le capteur 3 ne recevra dans son plan qu'une image floue Isf de ladite source lumineuse 6 dont l'image nette se forme dans le plan Isn distincte du plan du capteur 3.

Cela, si même la source lumineuse 6 était située sur l'axe optique OO', ce qui ne permettrait pas à soi seul de bien distinguer un défaut d'une saleté, tous deux se traduisant par un affaiblissement dans leur plan image de l'intensité lumineuse, l'un par déviation des rayons lumineux, l'autre par occultation. Et le contraste resterait faible, ce qui ne permettrait pas une grande précision.

C'est pourquoi, selon une caractéristique de l'invention, la source lumineuse 6 est écartée de l'axe optique OO' de la distance x telle que l'image floue que l'objectif 2 donne de cette source soit distante de l'axe optique de la valeur kx, k étant le rapport de réduction de l'optique 2 et la valeur kx correspondant à la demi-largeur du capteur 3, afin que celui-ci tangente extérieurement ladite image floue, formée dans son plan, de la source 6. Le capteur ne recevra donc de cette source qu'un minimum de lumière. De sorte qu'en l'absence de défaut le capteur 3 ne se trouvera que très faiblement excité par la frange extrême de l'image floue de la source 6, et pour une valeur constante dans le temps.

Mais on comprend qu'il suffira d'une très faible déviation des rayons lumineux provoqués par la présence d'un défaut 8 de la surface du verre pour qu'une partie au moins de la lumière précédemment tangente au capteur 3, déviée par réfraction par le défaut, forme directement sur le capteur une image réelle brillante de ce défaut qui apparaîtra donc très contrasté en bordure d'une zone plus sombre.

La figure 2A montre de façon simplifiée ce même schéma correspondant à la présence d'un défaut de la surface du verre.

Par contre selon la figure 2B on voit qu'un corps étranger 9 ou une tache qui serait situé à la surface du verre (supérieur ou inférieure) et qui ne provoquerait aucune déformation de la matière, n'étant pas inclus même partiellement dans la masse, ne produira aucune déviation du rayon lumineux qui sera simplement occulté, la faible intensité de la source lumineuse 6 ne permettant pas que se produise l'effet de diffraction à la périphérie dudit corps étranger. De sorte que le capteur 3 ne sera jamais excité par la présence d'une saleté qui ne déforme pas la surface du verre et qui de ce fait ne constitue pas une cause de rebut.

On comprend donc la possibilité de sélection offerte par ce procédé dit de « champ mixte » qui permet de discriminer les défauts du verre et les souillures ou dépôts qui ne sont pas eux-mêmes un défaut de la matière.

On comprend aussi que la sensibilité du système est d'autant plus grande que la distance (x) de la source lumineuse à l'axe optique OO' est plus faible, la déviation provoquée par un défaut et nécessaire pour former une image de celui-ci étant de ce fait plus faible aussi. La source lumineuse 6 ne doit cependant pas être amenée sur l'axe OO' lui-même de manière que le capteur soit maintenu à la limite de la frange de l'image floue de ladite source lumineuse.

Ainsi le système photosensible sera capable de déceler la moindre déviation des rayons lumineux provoquée par une déformation infime du verre.

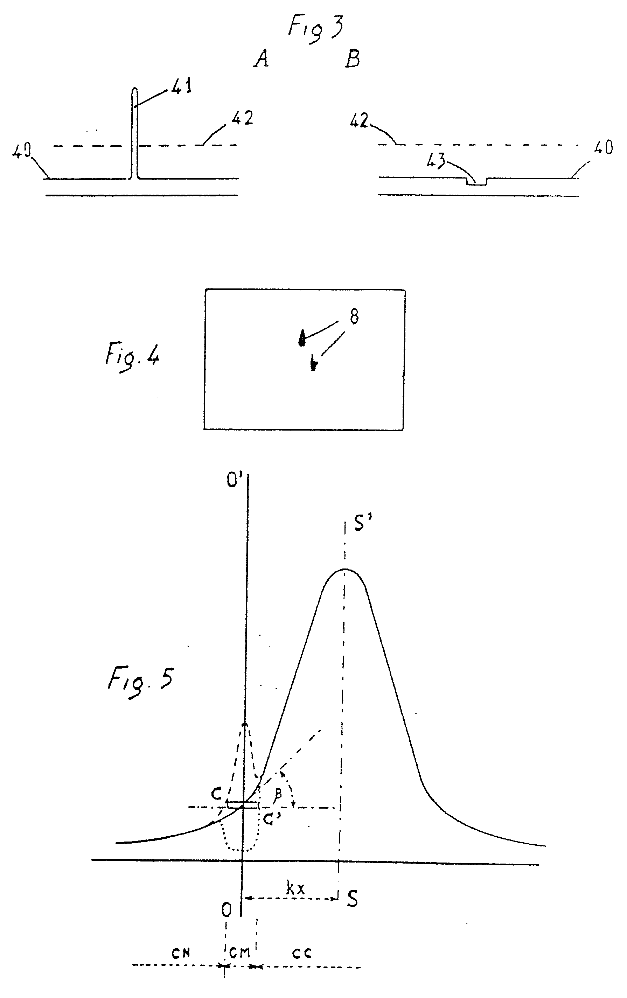

Un tel résultat est mis en évidence par les figures 3A et 3B qui matérialisent l'effet obtenu sur un oscilloscope par l'apparition d'un défaut en 3A et d'une saleté en 3B. On voit en effet dans les deux cas en 40 la matérialisation de la limite de l'image de la source lumineuse 6, limite appelée « seuil lumière ».

On constate alors qu'un défaut (fig. 3A) se traduira par un pic lumineux intense 41 qui atteindra ou dépassera le « seuil-défaut » 42, alors qu'une saleté (fig. 2B) se traduira par une perte de luminosité 43 inférieure au seuil lumière normal, qui produira de la part du capteur l'émission d'un signal différent du défaut, signal qui permettra la sélection au niveau d'un étage comparateur.

Ce phénomène est si caractéristique, que l'image des défauts 8, étant numérisée, apparaît sur un écran vidéo dans sa forme exacte et selon ses coordonnées propres comme une tache lumineuse sur fond sombre, les saletés au contraire n'apparaissant absolument pas (fig. 4).

La figure 5 montre la courbe de l'intensité lumineuse reçue par le capteur photosensible 3 représenté ici par le segment CC' considéré comme la coupe transversale d'un réseau de photodiodes centré sur l'axe optique OO' du système convergent, l'image de la source lumineuse 6 présentant son maximum d'intensité sur la parallèle SS' à OO' distante de cet axe de la valeur (kx) déjà définie. On constate que dans le cas de transmission normale à travers le dioptre plan formé par la feuille de verre dépourvue de défaut le capteur situé sur le segment CC' ne recevra qu'une faible quantité de lumière, la valeur de (y) en ce lieu étant considérée comme le « seuil-lumière », condition qui est réalisée quand la moitié du segment CC' centrée sur OO' est inférieure à (kx).

Par contre s'il existe une déformation quelconque de la surface de la feuille de verre 1, les rayons lumineux seront déviés par réfraction dans différentes directions, ce qui amènera obligatoirement au cours du déplacement de la feuille de verre une partie d'entre eux au moins à pénétrer dans le système optique formant à cet instant sur l'axe OO' du système optique une image d'une intensité supérieure au seuil-lumière précédemment enregistré qui atteindra ou dépassera le « seuil-défaut » correspondant à l'intensité lumineuse nécessaire pour provoquer l'émission par une ou plusieurs photodiodes du signal qui après traitement dans un comparateur sera exploité par l'ordinateur de décision en vue de la transmission au périphérique intéressé pour la détermination de la zone atteinte par le défaut considéré.

Inversement en cas de présence d'une saleté posée à la surface du verre sans qu'elle provoque une déformation de la matière, on constate, lorsqu'elle atteint dans son déplacement l'axe optique OO', un obscurcissement de l'intensité lumineuse reçue par le capteur qui devient inférieure au seuil-lumière normal (en pointillés sur la fig. 5). L'obscurcissement ainsi produit provoquera donc l'émission d'un signal qui, numérisé, sera évidemment différent de celui émis lors du passage d'un défaut, ce qui permet la sélection recherchée.

Cela démontre bien que la sensibilité du système sera d'autant plus grande que la distance (x) de la source lumineuse à l'axe OO' sera plus faible, ou réciproquement que la distance (kx) du réseau de photodiodes à l'axe de l'image reçue dans son plan de la source lumineuse sera plus petite, ce qui permettra aux défauts les plus petits d'être captés malgré la très faible déviation qu'ils provoqueront. Cette distance doit donc être aussi faible que possible sans que jamais cependant la source lumineuse 6 soit amenée sur l'axe optique OO' de façon que le capteur ne se trouve pas recevoir directement l'image de la source lumineuse elle-même. La limite de cette valeur est donnée lorsque le gain optique, qui est défini par la fonction $Go = (dAo)/(dx)$ atteint la valeur $G_o$ limite de la conduction optique ($A_o$ étant l'amplitude de la photodiode et $G_o$ étant exprimé en mm volt par millimètre).

La figure 5 montre bien les trois zones caractéristiques de l'observation des défauts : la zone de champ clair (CB) généralement utilisée pour la recherche simultanée des défauts et des saletés, la zone de champ noir (CN) utilisée principalement en micrographie, et la zone dite de « champ mixte » (CM) qui présente les particularités définies ci-dessus et aux limites de laquelle est placé le détecteur au point précis où le gain optique matérialisé par l'angle β est optimum.

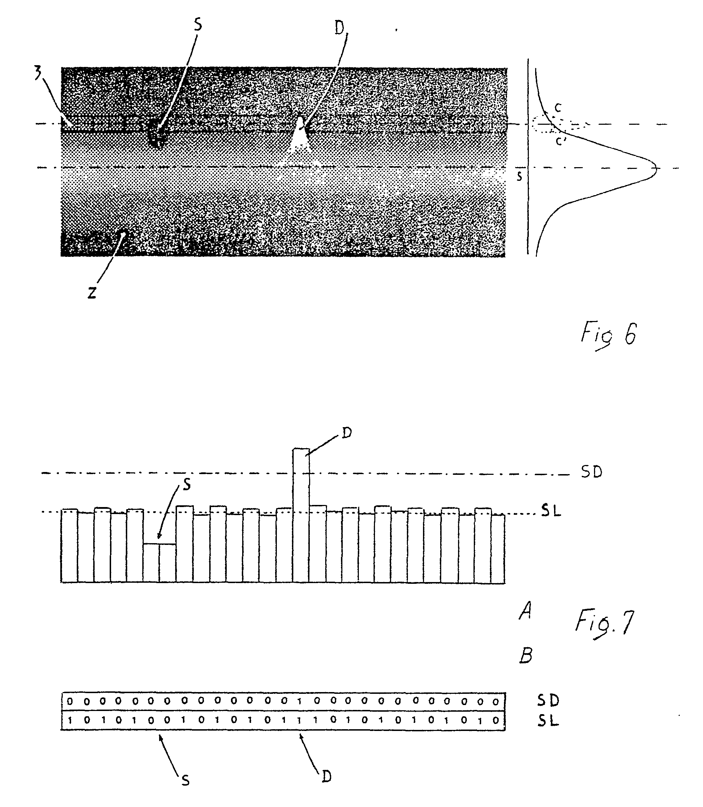

La figure 6 en est une matérialisation analogique qui montre en 3 le réseau de photodiodes et en Z la zone de lumière correspondant à la courbe de luminosité des images reçues par le capteur qui est reproduite à l'extrémité droite de la figure, l'ensemble des photodiodes étant montré aux limites de l'image de la source lumineuse. Il est remarquable de constater qu'un observateur placé dans les mêmes conditions que le réseau 3 de photodiodes observerait un défaut exactement comme il est indiqué sur cette figure 6, c'est-à-dire comme une percée lumineuse D émergeant d'une zone claire-obscure. Alors qu'une saleté apparaîtrait comme une tache plus sombre (Sa) ayant les contours exacts de ladite saleté.

Cette représentation peut aussi être interprétée sous sa forme numérisée après traitement informatique, selon la figure 7A qui représente l'image vidéo intégrée sur laquelle on voit le seuil-lumière SL au niveau duquel se situent l'ensemble des signaux émis par la photodiode en l'absence de défaut, et le seuil-défaut SD atteint ou dépassé par le signal détectant un défaut, la numérisation s'établissant comme indiqué sur la figure 7B.

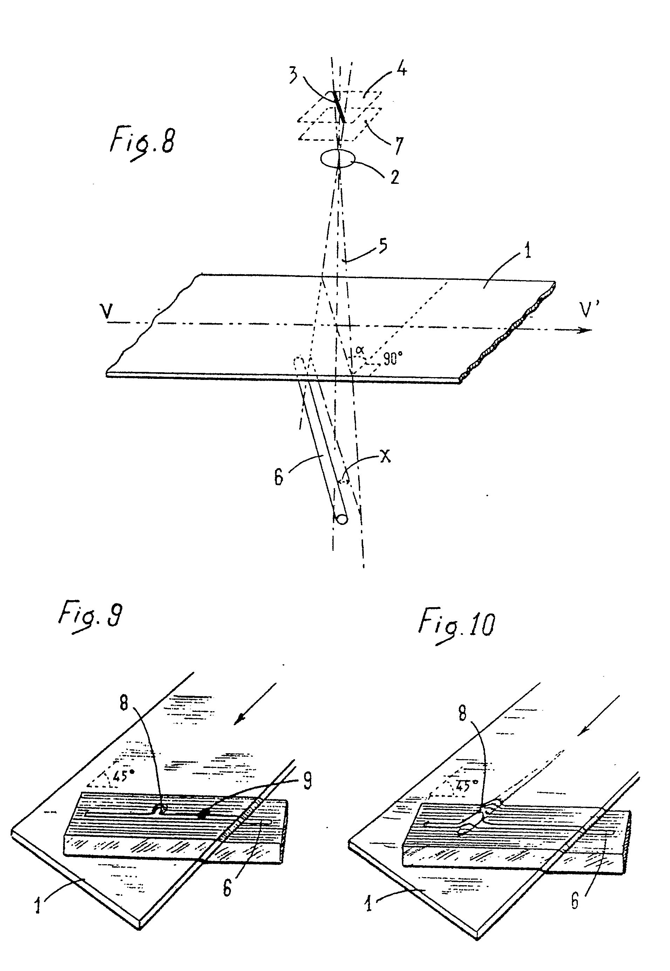

Donc (fig. 8) dans le dispositif mettant en œuvre ce procédé la feuille de verre 1 à contrôler circule dans le sens de la flèche dans un plan situé au-delà du foyer du système optique convergent 2 dont l'axe optique OO' est orthogonal au plan du verre dans le plan géométrique vertical passant par la médiane VV' de ce dernier. Un réseau de photodiodes 3 est situé à l'intersection du plan 4 de l'image réelle nette de la feuille de verre (donc de tout ce qu'elle supporte) donnée par l'optique 2 et du plan 5 orthogonal à ladite feuille de verre et contenant l'axe optique OO'. La longueur du capteur est au moins égale à la longueur de l'image réelle de la zone de la feuille de verre soumise à l'éclairement en champ mixte de la source lumineuse 6 située en dessous de la feuille 1.

Selon une caractéristique de la présente invention, la source lumineuse 6 qui peut être constituée, par exemple, par un tube fluorescent placé sous le verre est simultanément parallèle au plan du verre et au plan vertical 5 qui contient le réseau de photodiodes 3 et l'axe optique OO', et à une distance x de ce plan telle que l'image de ladite source se trouve nette dans son plan image 7 distinct du plan des photodiodes, donc floue à leur niveau, et à une distance kx de l'axe OO' définissant ainsi le champ mixte aux limites duquel se situent les photodiodes.

Cette valeur de x, qui est déterminée expérimentalement, doit être déterminée de façon très précise. Mais elle peut varier en fonction de l'épaisseur de la feuille de verre, ou de sa teinte, ainsi que de son indice de réfraction. Elle peut aussi varier au cours du contrôle d'une même feuille de verre du simple fait des mouvements éventuels, même faibles, du châssis de l'appareil dus à des causes mécaniques ou thermiques.

La précision exigée de la valeur de x en un point quelconque de la source lumineuse linéaire exige la précision du parallélisme de la source lumineuse 6 et du capteur 3.

Par ailleurs on constate (fig. 9 et 10) que pour rendre plus apparents encore les défauts et augmenter leur contraste par rapport au seuil-lumière il est nécessaire d'orienter la source lumineuse 6 selon un angle α (généralement de 45°) par rapport à la direction de déplacement VV' du verre, ladite source lumineuse 6 restant parallèle à la feuille contrôlée. Le résultat obtenu est apparent sur la fig. 9 dans le cas de défaut constitué par une bulle. L'effet de contraste produit par cette orientation donnée à la source lumineuse par rapport à la direction longitudinale de la feuille observée est plus apparente encore dans le cas de larmes qui sont des défauts étirés particulièrement peu apparents en surface. La fig. 9 montre ce qui apparaîtrait à un observateur lors du passage d'une larme. Il verrait l'image plus lumineuse de la source s'étirer et s'illuminer au niveau du défaut le rendant facilement décelable au niveau du capteur.

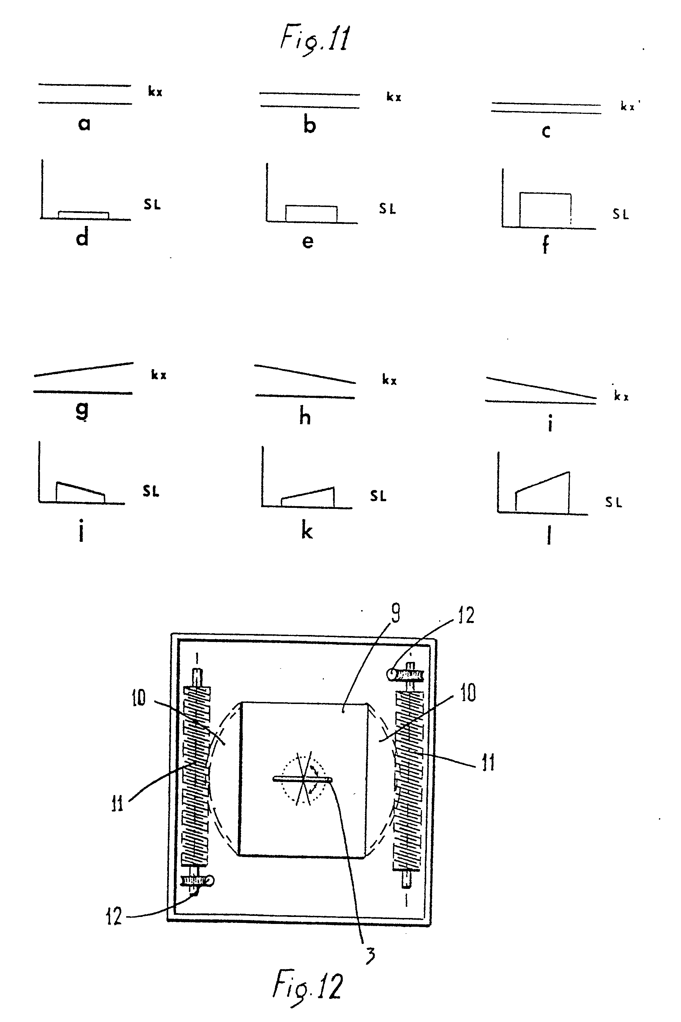

L'ensemble des figures 11 (de a à 1) montre schématiquement les résultats constatés au niveau du seuil-lumière lors d'un déplacement même infime du réseau de photodiodes 3 par rapport à l'image de la source lumineuse 6, que le parallélisme entre le capteur et la source 6 soit conservé (fig. 11a à 11f) ou qu'il soit altéré (fig. 11g à 11l). On voit dans ce dernier cas comme dans l'autre qu'une réduction de la valeur kx en un point quelconque du capteur fait accroître considérablement l'intensité du seuil-lumière au point correspondant de l'image. Et inversement. Ceci montre bien que la valeur de (x), ou ce qui a même valeur de conséquence de (kx) doit être maintenue constante et précise. Il est donc prévu selon la présente invention un dispositif d'alignement automatique du réseau de photodiodes 3 qui le maintient de façon constante parallèle à la source lumineuse 6 qui dans ce cas est fixe, et à une distance (kx) constante du centre de l'image floue donnée dans son plan de la source lumineuse de telle manière que le gain optique soit optimum et reste constant.

Pour cela (fig. 12) l'ensemble des photodiodes 3 est monté sur une platine horizontale 9 solidaire des secteurs dentés 10 diamétralement opposés par rapport au centre optique du réseau 3, lesdits secteurs circulaires dentés s'engrenant chacun avec une des vis sans fin 11 qui sont parallèles entre elles et perpendiculaires au diamètre médian desdits secteurs circulaires.

Chacune des vis sans fin 11 est actionnée en rotation au moyen de toute liaison mécanique non réversible convenable tel que celui représenté qui comporte une autre vis sans fin, par un moteur pas à pas 12 commandé par l'ordinateur dont la fonction sera décrite par la suite. De sorte que lesdites vis sans fin peuvent être animées chacune, indépendamment l'une de l'autre, d'un mouvement de rotation dans le même sens et à la même vitesse ; il s'ensuit un déplacement du réseau de photodiodes 3 parallèle à lui-même. Ou bien chacun des moteurs pas à pas 12 peut imprimer à chacune des vis sans fin 11 un mouvement de rotation dans des sens et à des vitesses différentes, ce qui a pour effet de déplacer le réseau 3 d'un angle déterminé.

Chacun de ces mouvements, qui permet la précision nécessaire grâce à la démultiplication obtenue, ramène constamment le réseau de photodiodes 3 dans le plan 5 parallèle à la source lumineuse 6 (fig. 8) et à la distance (kx) qui a été préalablement déterminée expérimentalement en commandant manuellement les déplacements de la platine 9 jusqu'à l'obtention du gain optique optimum en faisant traverser le faisceau lumineux par un défaut quelconque affectant une feuille de verre quelconque aussi, la position ainsi déterminée du capteur étant mise en mémoire pour être automatiquement maintenue.

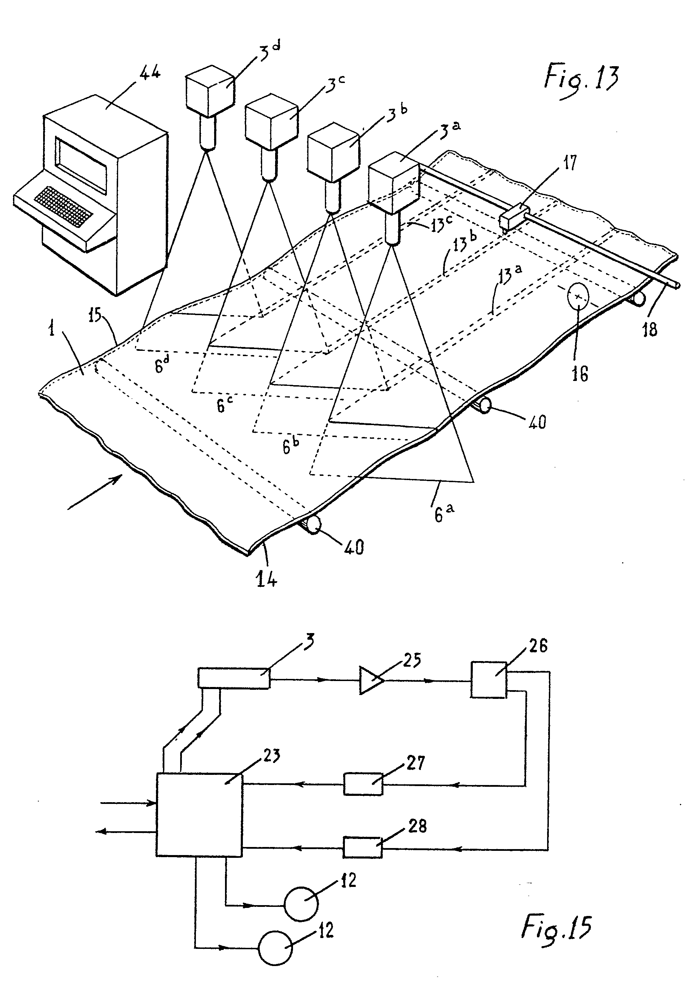

Le dispositif étant ainsi constitué, le contrôle effectif des feuilles de verre en continu au cours de leur fabrication, à la sortie du bain d'étain qui constitue la caractéristique du procédé de fabrication techniquement dénommé « float-glass », s'effectue en couvrant la totalité de la largeur de la feuille par autant de sources lumineuses linéaires 6 qu'il est nécessaire (fig. 13). Chacun de ces dispositifs lumineux 6 sont organisés selon l'angle α nécessaire par rapport au sens de déplacement de la feuille de verre contrôlée. Indépendamment de l'avantage que comporte cette position oblique pour la détection des défauts qui a été précédemment décrite, cela permet d'organiser l'éclairage oblique sur la totalité de la largeur de la bande dans l'espace laissé libre entre deux rouleaux 40 qui la supportent, sans que ceux-ci gênent le fonctionnement du dispositif. Les champs d'éclairement de chacune de ces sources se recouvrent partiellement en 13a, 13b, 13c dans le sens de la largeur de la feuille de verre 1 de façon à ne laisser aucun hiatus dans la zone observée.

Comme il sera indiqué par la suite, l'ensemble électronique d'analyse des signaux émis par les photodiodes permet de mettre en mémoire les signaux reçus dans chacune de ces zones de recouvrement par le premier réseau excité, 3a, par exemple, dans le sens de défilement de la feuille 1, de façon à inhiber le second signal provoqué par ce même défaut dans cette même zone au niveau de la seconde caméra 3b.

De même, du fait de la longueur de la feuille de verre étirée selon le procédé de fabrication décrit, ainsi que du fait de la plasticité subsistante du verre en cours de refroidissement, on constate que les bords 14 et 15 de la bande a ne sont pas parfaitement rectilignes quoique maintenus de façon parfaite dans le plan horizontal. Ces bords présentent ce que les verriers appellent le « dévirage » latéral apparent sur la figure 13. En outre ces bords sont aussi marqués en relief par les molettes d'entraînement. De sorte que, pour éviter que ces défauts latéraux d'alignement et de planéité ne provoquent des signaux parasites au niveau des capteurs extrêmes 3a et 3d par exemple, il a été prévu d'introduire dans l'ordinateur un programme de masque électronique d'extrémité qui permet de rendre aveugles les photodiodes correspondant à cette zone, qui par la suite est systématiquement coupée pour être à nouveau fondue.

Par ailleurs un tachymètre 16 d'un type quelconque, tel qu'une molette 16 entraînée par la surface du verre 1 permet de déterminer la vitesse de défilement et d'en déduire les abcisses longitudinales d'un défaut détecté par l'un quelconque des réseaux de photodiodes. La connaissance du N° de la ou des photodiodes excitées fournit les ordonnées du défaut correspondant. Chacune de ces informations est mise en mémoire pour assurer le déclenchement du système automatique de marquage 17 quand le défaut repéré atteint la zone d'action de ce dernier dispositif. Celui-ci peut être, à titre d'exemple seulement, un dispositif pourvu d'une pulvérisation de liquide ou plus simplement d'une craie grasse employée chez les verriers capable de se déplacer le long du rail transversal 18 de façon à se trouver au niveau exact de l'ordonnée du défaut au moment précis où celui-ci se présentera sous cet appareil qui se déclenchera en fonction de l'information en abcisse qui a précédemment été mise en mémoire et peut-être aussi un ensemble de marqueurs immobiles juxtaposés, suffisamment nombreux pour couvrir la largeur de la feuille de façon quasiment continue leur manœuvre s'effectuant individuellement à la manière des touches de piano.

Par ailleurs, le dispositif est complété par la projection continue d'air comprimé au niveau de chaque rampe d'éclairage afin d'assurer leur dépoussiérage constant, ce dispositif particulier n'étant pas représenté.

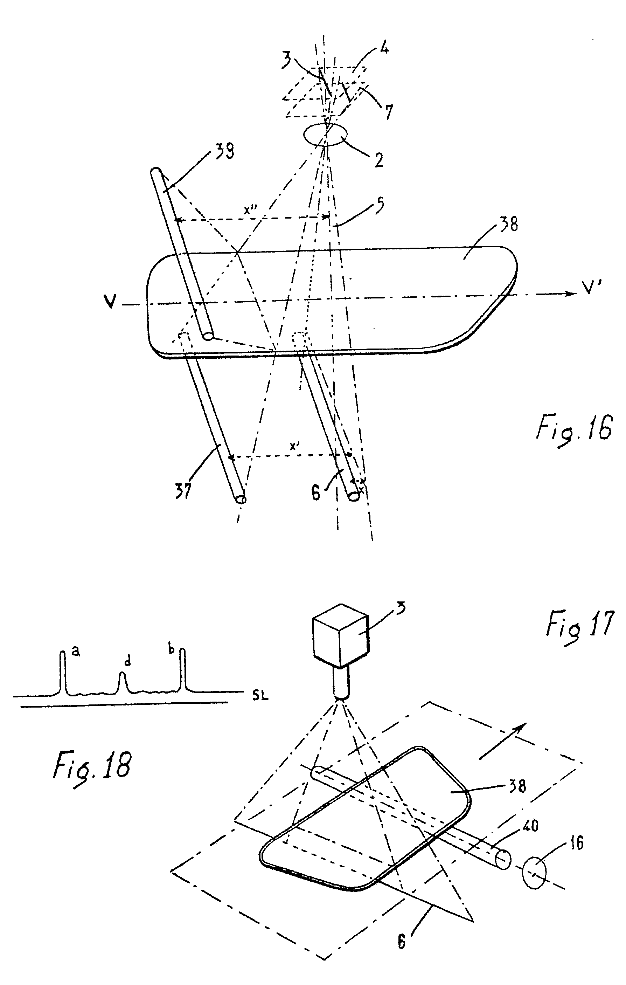

La détection des défauts s'effectuant, comme il a été décrit, au moyen du ou des réseaux de photodiodes 3 (en nombre suffisant pour couvrir la largeur de la feuille à contrôler), la réception des signaux ainsi émis et leur analyse, ainsi que l'interprétation et la transmission des ordres qui en sont déduits s'effectuent au moyen d'ensembles électroniques par la voie d'ordinateur de fonctions spécialement conçus et organisés selon les figures 14 et 15.

Selon la figure 14 les sources linéaires d'éclairage 6 sont placées sous la feuille de verre 1 à observer, à une distance aussi grande que le permet la configuration normale d'une machine de fabrication de verre selon le procédé décrit, dans un plan parallèle à ladite feuille et de telle manière que leurs zones d'éclairement respectives et successives se recouvrent, comme il a été indiqué ci-dessus, au niveau de la feuille de verre, qui est soumise à l'observation des caméras 19 qui contiennent chacune l'optique 2 et le réseau de photodiodes 3 correspondant monté sur une platine 9 soumises chacune à l'action d'alignement automatique de moteurs pas à pas individuels 12. D'autre part, chacune des sources lumineuses 6, constituée par un tube fluorescent, est alimentée par un convertisseur 20 qui leur fournit une tension adéquate à la fréquence de 25 KHz qui permet d'obtenir une parfaite constance de la luminosité grâce à l'inertie de la luminescence de ce système, la luminosité étant elle-même contrôlée par l'ordinateur commun 21 dit ordinateur de décision qui reçoit les informations des éléments capteurs 22 dont chaque organe optique est muni. Chacun de ces capteurs 22 comporte lui-même un ordinateur 23 (fig. 15) qui pilote le réseau de photodiodes qui lui est propre assurant entre chacune d'elles une fréquence déterminée de balayage selon une période d'horloge correspondant à la fréquence nécessaire pour assurer une observation continue de la totalité de la surface du verre en fonction de sa vitesse de défilement contrôlée par le tachymètre.

Par exemple pour une vitesse d'avancement du verre de 400 mm/s, la zone observée par les photodiodes étant de 0,35 mm, la fréquence de balayage nécessaire sera de 1,14 KHz, la fréquence d'horloge, de diode à diode étant dans ce cas de 0,6 MHz pour un réseau de 512 photodiodes. Ces fonctions sont asservies au moyen de l'ordinateur 23 annexé au capteur qui est capable d'adresser des ordres aux moteurs pas à pas 12 en vue du maintien automatique des réseaux de photodiodes 3 dans la zone de gain optique optimum.

Le signal émis par la ou les photodiodes excitées par le rayonnement dévié par un défaut survenant à la surface du verre est soumis à l'amplificateur 25, puis perçu par le comparateur 26 qui reçoit par ailleurs d'une part l'information du seuil-lumière correspondant au niveau d'éclairement nécessaire en l'absence de défaut et d'autre part l'information du seuil-défaut qui correspond au défaut d'éclairement devant être considéré comme aberrant, donc déterminant un défaut. Les signaux ainsi reçus par le comparateur 26 en provenance du réseau de photodiodes sont comparés à chacun de ces seuils et constituent les informations émises par le comparateur 26 et adressées individuellement aux mémoires tampon 27 et 28 qui stockent séparément les informations lumière et les informations-défaut qui sont intégrées par l'ordinateur-capteur 23 qui peut ainsi adresser des informations à l'ordinateur de décision 21 (fig. 14) qui, en fonction des critères qui lui ont été fournis par l'ordinateur de dialogue 27 adresse des ordres aux périphériques de marquage 28 qui commandent le marqueur 17 ou périphériques de découpage automatique 29 par l'intermédiaire de l'interface universelle 30.

Selon la figure 14 l'organigramme de l'ensemble du dispositif comporte donc essentiellement les organes d'acquisition des données constitués, de part et d'autre de la feuille 1, par les émetteurs linéaires de flux lumineux 6 alimentés en 25 KHz par les convertisseurs 20, et les cellules optiques 19 qui focalisent l'image des défauts sur les réseaux de photodiodes 3 contenus dans les capteurs 22 qui comportent en eux-mêmes (fig. 15) l'ordinateur-capteur 23 qui pilote la fréquence de balayage des réseaux 3 et reçoit les signaux émis par ceux-ci après comparaison au niveau du comparateur 26 avec le seuil-lumière et le seuil-défaut, ledit ordinateur capteur 23 adressant les informations ainsi créées à l'ordinateur de décision 21 à travers le poste 31 dit d'émission-réception qui reçoit par ailleurs les informations du tachymètre 16 et assure le filtrage afin de permettre de travailler en milieu parasité.

L'ordinateur de décision 21 reçoit par ailleurs en provenance de l'ordinateur de dialogue 27 les données considérées comme critère de base, lui permettant lorsque tel critère est ou n'est pas atteint de transmettre des ordres par l'intermédiaire de l'amplificateur de puissance 32 d'une part et dans certains cas, aux moteurs pas à pas 12 de contrôle de position des réseaux de photodiodes dans la zone de gain optique optimum du champ mixte et d'autre part aux convertisseurs 20 à luminosité variable de façon à régler l'intensité lumineuse en fonction des besoins instantanés et enfin permet en dialogue avec l'ordinateur-capteur 23 de régler la fréquence de balayage des réseaux de photodiodes en fonction de la vitesse de défilement du verre dont l'information est fournie par le tachymètre 16.

Par ailleurs, comme il a été dit, l'ordinateur de décision commande en fonction de l'existence d'un défaut, par l'intermédiaire de l'interface 30, les organes de marquage du verre 28 ou de découpage automatique 29 dont l'intervention constitue le but de l'ensemble du procédé.

Pour assurer le dialogue avec l'ordinateur de décision 21, l'ordinateur 27 est couplé avec les périphériques de commande tels que le clavier 33, ou avec les périphériques de contrôle tels que l'écran 34 et l'imprimante 35, ainsi que avec la mémoire de masse telle que les disques magnétiques 36, ou tous autres dispositifs nécessaires. L'ensemble du poste d'émission-réception 31, de l'ordinateur 21, de l'amplificateur 32, de l'interface 30 et de l'ordinateur de dialogue 27 ainsi que de ses périphériques sont contenus dans une armoire 44 extérieure aux éléments d'acquisition de données 6, 20, 19 et 22. Il est indiqué qu'en vue d'assurer une parfaite précision dans les résultats obtenus il est effectué 10 000 mesures sur le signal donné par chaque photodiode, l'ordre éventuellement transmis n'étant la conséquence que de l'analyse de la moyenne de ce lot ce qui permet d'atteindre la précision de 1/100 de millivolts dans le signal reçu des photodiodes.

Un tel dispositif essentiellement destiné au contrôle du verre défilant de façon continue à la sortie du poste de fabrication ci-dessus décrit est évidemment capable d'être utilisé aussi pour le contrôle de tout autre matériau transparent ou translucide. Il peut aussi être utilisé pour le contrôle des surfaces planes de verre déjà découpé telles par exemple que les feuilles de verre destinées à la fabrication des pare-brises feuilletés ou trempés.

Dans ce cas la recherche des défauts s'effectue avant les opérations de plaquage des multicou-ches ou de trempe, ce qui permet de comprendre qu'il est alors utile de détecter non seulement les défauts du verre dans sa matière mais aussi les saletés qui peuvent souiller sa surface malgré le lavage préalable que chaque feuille prédécoupée a déjà subi. En effet il est indispensable que lors de l'assemblage des couches multiples ou de la trempe le verre ne porte aucune trace de saleté qui s'y trouverait irrémédiablement fixée.

De sorte que selon un mode particulier de réalisation (figure 16), au dispositif d'éclairage 6 ci-dessus décrit qui, grâce à l'application du champ mixte, permet de détecter les plus petits défauts qui affectent la surface du verre, est adjoint un dispositif complémentaire d'éclairage plus intense qui est tenu éloigné de l'axe optique non plus aux limites du champ clair et du champ mixte comme l'est la source lumineuse 6 (selon la figure 5) mais aux limites extrêmes du champ mixte et du champ noir (selon cette même figure) ce qui permet, comme il a été vu, de détecter les corps étrangers déposés à la surface du verre grâce dans ce cas à l'effet de diffraction créé à leur périphérie. Un tel autre dispositif d'éclairage 37 est placé pour éclairer la partie inférieure de la plaque de verre 38 taillée en forme de pare-brise, afin de détecter les saletés adhérant à la surface. Et un dispositif d'éclairage 39 est placé à la partie supérieure pour compléter ce dernier contrôle, les distances x' et x" de ces éclairages à l'axe optique étant telles que les conditions ci-dessus décrites se trouvent réalisées.

Dans ce cas l'éclairage nécessaire en 37 peut se trouver éloigné de l'axe optique au point de nécessiter une puissance importante qui peut être obtenue par des tubes à halogène.

Selon la figure 17 le tachymètre 16, qui est dans ce cas lié aux rouleaux porteurs du pare-brise, sert à numériser les dimensions du pare-brise et à créer le long de cette pièce une zone neutre qui n'est pas analysée, le bord du pare-brise étant systématiquement pris comme un défaut. Ceci est apparent sur la figure 18 où est représentée la courbe spectroscopique du pare-brise, où l'on voit que les bords simulent des défauts (a) et (b), une impureté ou un défaut réel se trouvant compris entre ces limites en (d) par exemple. Les positions d'entrée et de sortie du pare-brise sont ainsi déterminées par l'ordinateur avec précision ainsi que sa largeur exacte, ce qui permet de déterminer aussi avec précision les coordonnées d'un défaut qui serait détecté.

La présente invention permet de détecter tous les défauts affectant la surface d'une feuille plane de verre qu'il s'agisse d'une feuille défilant en continu ou en sections séparées, ledit dispositif permettant de détecter soit les défauts seuls de la matière à l'exclusion des saletés déposées à sa surface, ou bien y compris celles-ci si nécessaire, ledit procédé pouvant être appliqué pour la recherche des défauts de toute surface transparente autre que le verre.

## Revendications

1. Procédé permettant l'examen des matières transparentes en feuille, au cours de leur défilement, en vue de déceler les défauts de ladite matière et de procéder à la discrimination des défauts d'une part et des corps étrangers déposés sur ladite feuille transparente d'autre part, selon lequel on éclaire une face de ladite feuille transparente (1) au moyen d'une source lumineuse (6), on place un photo-détecteur (3) au-delà de l'autre face de la feuille et on place un système optique convergent (2) entre la feuille et le photo-détecteur, la source lumineuse (6) se trouvant déplacée par rapport à l'axe optique du photo-détecteur caractérisé par le fait que ladite source lumineuse (6), dont le faisceau lumineux est de faible ouverture, est de faible intensité et émet une lumière diffuse ;

qu'au moyen du système optique (2) ayant son axe optique perpendiculaire au plan de la feuille, on forme l'image réelle nette de la source lumineuse (6) dans un plan imaginaire situé entre le photo-détecteur (3) et le système optique (2) ;

que l'on place ledit photo-détecteur (3) à l'endroit où se forme au moyen du même système optique (2) l'image réelle nette de ladite feuille (1), de telle manière que ledit axe optique soit à une distance x de la source lumineuse (6) telle qu'il reçoive de façon constante une frange de l'image réelle de ladite source lumineuse qui se forme nette dans le plan imaginaire et floue à son niveau ;

que l'on règle l'intensité de la source lumineuse (6) pour que la quantité constante de lumière dite « seuil-lumière » reçue par le photo-détecteur (3) reste toujours inférieure au seuil d'excitation dit « seuil-défauts » de déclenchement du système d'analyse qui reçoit et traite les signaux émis par le photo-détecteur (3) ; ledit seuil-défauts étant atteint et dépassé lors du passage d'un défaut qui provoque la déviation du faisceau lumineux par réfraction, d'où formation d'une image réelle brillante dudit défaut sur le photo-détecteur (3) en sus de l'image floue partiellement reçue par lui de façon permanente, ce qui provoque l'émission d'un signal qui sera enregistré et traité par des organes adéquats ; le passage d'un corps opaque seulement déposé sur la feuille ne provoquant, de par son opacité même, qu'un affaiblissement de l'image réelle partiellement reçue de façon permanente par le photo-détecteur (3) dont l'excitation passera dans ce cas en dessous du « seuil-lumière » constant.

2. Procédé selon la revendication 1, caractérisé par le fait que la position optimale de la source de lumière (6) par rapport à l'axe optique du système photo-détecteur (3) est telle qu'en ce point le gain optique représenté par Go = (dAo)/(dx) soit optimum, Ao étant l'amplitude du signal émis par le photo-détecteur (3), ladite position du photo-détecteur par rapport à la source lumineuse étant définie comme la zone de « champ mixte » intermédiaire entre la zone dite de « champ clair » qui contient le maximum d'éclairage et la zone dite de « champ noir » où les corps opaques interposés à un rayonnement lumineux provoque l'effet de diffraction.

3. Dispositif mettant en œuvre le procédé conforme à l'ensemble des revendications précédentes, dans lequel la source lumineuse (6) située en dessous de la feuille transparente (1) à contrôler qui défile est mince et linéaire, parallèle au plan horizontal de ladite surface et simultanément parallèle au plan vertical contenant l'axe optique du système optique (2) et le photo-détecteur constitué par un réseau linéaire de photodiodes (3) et enfin située par rapport à ce plan vertical à une certaine distance x, caractérisé par le fait que la source lumineuse est orientée à 45° par rapport à la direction de défilement de ladite surface et par le fait que ladite distance x est telle que ledit réseau de photo-diodes se trouve tangent extérieurement à la frange extrême d'une image réelle floue de la source lumineuse (6) donnée par le système optique (2) dans le plan du réseau de photodiodes (3) qui est lui-même situé dans le plan horizontal dans lequel est projetée l'image réelle nette de la feuille et de tout défaut qu'elle peut porter, les longueurs et positions réciproques de la soruce lumineuse (6) et du réseau de photodiodes (3) étant telles que l'image réelle floue que le système optique (2) donne de la source lumineuse (6) dans le plan du réseau de photodiodes (3) couvre la longueur dudit réseau de photo-diodes, le balayage cyclique de la totalité de la feuille ayant une fréquence imposée électroniquement par un premier ordinateur (21), le réseau de photo-diodes lui-même comportant une période propre de test de diode à diode dépendant de cette fréquence.

4. Dispositif selon la revendication 3, caractérisé par le fait que, pour que la distance x soit maintenue constante avec une extrême précision de même que le parallélisme parfait de la source lumineuse (6) à ce plan vertical, afin que toujours le gain optique soit maintenu optimal sur toute la longueur du réseau de photodiodes (3), le réseau de photodiodes (3) est monté sur un plateau (9) muni de deux secteurs circulaires dentés (10) diamétralement opposés de part et d'autre du réseau de photodiodes et pouvant être sollicités soit simultanément soit indépendamment l'un de l'autre à des vitesses égales ou différentes et dans le même sens ou en sens contraire au moyen de vis sans fin (11) animées par deux moteurs pas à pas (12) commandés indépendamment l'un de l'autre en fonction de la quantité de lumière reçue par chacune des photodiodes, ledit réseau pouvant ainsi être déplacé automatiquement soit parallèlement à lui-même soit angulairement, et pouvant même subir les deux mouvements simultanés de façon à se déplacer selon leur résultante d'une valeur maximale kx, k étant le coefficient de réduction du système optique.

5. Ensemble comportant plusieurs dispositifs selon l'une des revendications 3 ou 4, lorsque l'image réelle nette de la largueur de la feuille (1) projetée sur le réseau de photodiodes (3) de l'un desdits dispositifs est plus large que ce réseau de photodiodes, caractérisé par le fait que la position réciproque de chacun de ces dispositifs comporte aux limites communes de chacun d'eux une zone de recouvrement (13) des champs d'éclairement de chaque source lumineuse (6), afin d'éviter tout hiatus entre eux.

6. Ensemble selon la revendication 5, caractérisé par le fait qu'un tachymètre (16) fournissant l'information concernant la vitesse de défilement de la feuille permet de déterminer les coordonnées du défaut éventuellement détecté, le numéro de la photodiode excitée fournissant les abscisses et le tachymètre les ordonnées, la même information permettant aussi de déterminer la fréquence de balayage des réseaux de photodiodes (3) nécessaires pour que la totalité de la feuille (1) soit contrôlée de la même façon, quelle que soit sa vitesse de défilement.

7. Ensemble selon la revendication 6, caractérisé par un organe de marquage (17) piloté par les informations en coordonnées ainsi fournies et assurant la détermination matérielle de l'emplacement du défaut sur la feuille (1) qui est constitué par un chariot se déplaçant sur un guide occupant toute la largeur de la feuille, son déplacement étant commandé par un moteur à couple de démarrage et de freinage élevé qui reçoit les informations en abscisse déterminées par le numéro de la diode excitée par le défaut correspondant, le déclenchement du marquage lui-même s'effectuant selon les ordonnées déterminées par l'information fournies par le tachymètre, ces deux informations étant mises en mémoire à l'instant de la détection du défaut, l'information en vitesse permettant le déclenchement à l'instant du passage du défaut sous l'organe de marquage qui comporte un corps solide capable de laisser une marque apparente sur la surface contrôlée, le ou les organes de marquage ainsi constitués s'abaissant jusqu'au contact de la surface 1 à l'instant déterminé pour le marquage.

8. Ensemble selon la revendication 14, caractérisé par le fait que l'ouverture linéaire de chaque coffre contenant chaque source lumineuse (6) est soumise à l'action d'une soufflerie d'air comprimé destinée à éviter l'empoussièrement de chacune desdites sources.

9. Ensemble selon l'une des revendications 7 ou 8, caractérisé par le fait que les signaux électriques fournis par chacune des photodiodes du ou des réseaux de photodiodes (3), sont adressés après amplification à un comparateur (26) qui reçoit par ailleurs et séparément l'information du « seuil-lumière » et celle du « seuil-défaut », ce qui permet d'obtenir des « données-lumière » et des « données-défaut » mises séparément en mémoire et analysées par un deuxième ordinateur comprenant des mémoires vives et des mémoires mortes dit ordinateur capteur (23) qui en fonction des instructions extérieures reçues de tout périphérique de dialogue (27) fournit des résultats qui, filtrés de tout parasite par un poste d'émission réception (31) qui reçoit aussi l'information du tachymètre (16), sont adressés au premier ordinateur dit ordinateur de décision (21) qui émet les ordres adéquats à chaque organe de la machine tel que l'amplificateur de puissance (32) pour régler l'intensité d'éclairage des sources (6) en vue de maintenir la constance du « seuil-lumière », aux systèmes de réglage électroniques de la fréquence de balayage par les photodiodes de la largeur de l'image qu'elles contrôlent en fonction de l'information de vitesse fournie par le tachymètre (16), et au système de déclenchement de ou des organes de marquage en fonction des coordonnées du défaut éventuel, les moteurs pas à pas (12) destinés à maintenir constante la distance kx du réseau de photodiodes (3) par rapport à l'image de la source lumineuse ainsi que son parallélisme par rapport à celle-ci étant commandés par le deuxième ordinateur (23).

10. Ensemble selon la revendication 9, caractérisé par le fait qu'il est prévu un masque électronique qui rend aveugle de façon automatique les photodiodes correspondant à l'image d'une largeur déterminée de chacune des rives de la feuille (1), quelle que soit cette largeur, de façon à ne pas prendre en compte comme un défaut l'image du bord même de la feuille qui n'est pas toujours rectiligne, ni les traces des molettes d'entraînement que les bordures comportent.

11. Ensemble selon la revendication 10, caractérisé par le fait que, lorsqu'existe la zone (13) de recouvrement entre les zones d'éclairement de plusieurs sources lumineuses, le signal éventuel d'un défaut donné par le premier réseau atteint est mis en mémoire et l'excitation de la ou des diodes correspondantes du deuxième réseau dans le sens de défilement correspondant à la même zone de recouvrement est inhibée jusqu'à l'instant du passage du même défaut au niveau de cette ou ces diodes, pour que ce deuxième signal ne fasse pas double emploi avec le premier déjà émis concernant ce même défaut.

12. Ensemble selon l'une des revendications 5 à 11, caractérisé par le fait que la ou les sources lumineuses (3) sont constituées par autant de tubes luminescents alimentés sous 25 Khz pour assurer une parfaite continuité du phénomène du fait de la légère rémanence du tube fluorescent.

13. Ensemble selon la revendication 12, caractérisé par le fait que pour le contrôle particulier de la feuille, quand il s'agit des feuilles de verre découpées (38) spécialement destinées à la fabrication des pare-brise par exemple, feuilletés ou trempés, le contrôle ne devant pas se limiter aux défauts, même infimes, que permet le contrôle sous « champ mixte », mais devant être poussé jusqu'à la détection des saletés qui peuvent subsister malgré le lavage préalable, afin que la feuille de verre (38) soit dépouillée de tout défaut ou saleté lors du feuilletage ou de la trempe, chaque dispositif comporte, en plus une source lumineuse intense (37) situé en dessous de la feuille de verre et une source lumineuse supérieure (39) fonctionnant en réflexion, ces deux sources lumineuses complémentaires étant elles-mêmes linéaires et simultanément parallèles au plan horizontal de la feuille de verre (38) et au plan vertical contenant l'axe optique et le réseau de photodiodes (3), et leurs distances respectives x' et x'' à ce dernier plan étant telles que chacun d'eux se trouve aux limites inférieures du « champ mixte » du côté du « champ noir ».

14. Ensemble selon la revendication 13, caractérisé par le fait que le tachymètre (16) est solidaire dans ce cas d'un rouleau (40) porteur de la feuille de verre à contrôler.

15. Ensemble selon la revendication 14, caractérisé par le fait que le bord biseauté de la feuille de verre (38) considéré comme un défaut par le ou les réseaux de photodiodes (3) permet de déterminer de façon précise la longueur de ladite feuille de verre (38), donc de déterminer par rapport à sa surface, et en tenant compte des informations du tachymètre (16), les coordonnées précises du défaut ou de la saleté éventuels dans le cadre de la surface de la feuille de verre (38) ainsi que de créer une zone périphérique qui peut être masquée s'il est utile de ne pas procéder à une détection dans sa surface.

**Claims**

1. A method enabling the examination of transparent matter in sheets as they travel past, with a view to detecting defects in the said matter and proceeding to discrimination between defects on the one hand and foreign bodies deposited on the said transparent sheet on the other, in accordance with which one face of the said transparent sheet (1) is illuminated by means of a source (6) of light, a photodetector (3) is placed beyond the other face of the sheet and a convergent optical system (2) is placed between the sheet and the photodetector, the source (6) of light being displaced with respect to the optical axis of the photodetector, characterized by the fact that the said source (6) of light, the light beam from which is of small aperture, is of low intensity and emits a diffused light ;

that by means of the optical system (2) having its optical axis perpendicular to the plane of the sheet the sharp real image of the source (6) of light is formed in an imaginary plane situated between the photodetector (3) and the optical system (2) ;

that the said photodetector (3) is placed at the point where by means of the same optical system (2) the sharp real image of the said sheet (1) is formed, in such a way that the said optical axis is at such a distance x from the source (6) of light that it receives constantly a fringe of the real image of the said source of light which is formed sharply in the imaginary plane and fuzzily at its own level ;

that the intensity of the source (6) of light is adjusted in order that the constant amount of light called the « light threshold » received by the photodetector (3) remains always lower than the threshold of excitation called the « defects threshold » for triggering the system of analysis which receives and deals with the signals emitted by the photodetector (3), the said « defects threshold » being reached and passed at the time of a defect passing by, which causes deviation of the light beam by refraction, whence the formation of a bright real image of the said defect upon the photodetector (3) over and above the fuzzy image partially received by it permanently, which causes the emission of a signal which will be recorded and dealt with by adequate means ; whereas passing by of an opaque body only lying on the sheet causes from its opacity as such, only a weakening of the real image partially but permanently received by the photodetector (3) the excitation of which in this case will pass underneath the constant « light threshold ».

2. A method as in Claim 1, characterized by the fact that the optimum position of the source (6) of light with respect to the optical axis of the photodetector system (3) is such that at this point the optical gain represented by Go = (dAo)/(dx) is an optimum, Ao being the amplitude of the signal emitted by the photodetector (3), the said position of the photodetector with respect to the source of light being defined as the zone of « mixed field » intermediate between the zone called the « bright zone » which contains the maximum illumination and the zone called the « dark zone » in which the opaque bodies interposed in a light radiation cause the diffraction effect.

3. A device which puts into effect the method as in the whole of the preceding Claims, and in which the source (6) of light, situated below the transparent sheet (1) which is to be checked as it passes by, is thin and linear and parallel with the horizontal plane of the said surface and simultaneously parallel with the vertical plane containing the optical axis of the optical system (2) and the photodetector consisting of a linear network of photodiodes (3) and finally situated with respect to this vertical plane at a certain distance x, characterized by the fact that the source of light is directed at 45° with respect to the direction of travel of the said surface and by the fact that the said distance x is such that the said network of photodiodes is lying at a tangent to the outside of the extreme fringe of a fuzzy real image of the source (6) of light, given by the optical system (2) in the plane of the network of photodiodes (3) which in turn is situated in the horizontal plane into which is projected the sharp real image of the sheet and of any defect which it may be showing, the lengths and mutual positions of the source (6) of light and of the network of photodiodes (3) being such that the fuzzy real image that the optical system (2) gives of the source (6) of light in the plane of the network of photodiodes (3) covers the length of the said network of photodiodes, the cyclic sweeping of the whole of the sheet having a frequency imposed electronically by a first computer (21), the network of photodiodes in turn having its own test period, diode by diode, depending upon this frequency.

4. A device as in Claim 3, characterized by the fact that, in order that the distance x shall be kept constant with extreme accuracy as well as the perfect parallelism of the source (6) of light with this vertical plane in order that the optical gain shall always be kept at an optimum over the whole length of the network of photodiodes (3), the network of photodiodes (3) is mounted on a plate (9) equipped with two toothed circular sectors (10) opposed diametrically on opposite sides of the network of photodiodes and able to be acted upon either simultaneously or independently of one another at equal or different speeds and in the same direction or in opposite directions by means of endless screws (11) driven by two stepping motors (12) controlled independently of one another as a function of the amount of light being received by each of the photodiodes, the said network thus being able to the displaced automatically either in parallel with itself or angularly, and being able even to undergo the two motions simultaneously so as to be displaced in accordance with their resultant by a maximum value kx, k being the coefficient of reduction of the optical system.

5. An assembly including a number of devices as in one of the Claims 3 or 4, when the sharp real image of the width of the sheet (1) projected onto the network of photodiodes (3) of one of the said devices is wider than this network of photodiodes, characterized by the fact that the mutual position of each of these devices allows at the common boundaries of each of them, of a zone of overlap (13) of the fields of illumination of each source (6) of light, in order to avoid any gap between them.

6. An assembly as in Claim 5, characterized by the fact that a tachometer (16) providing the information concerning the speed of travel of the sheet enables the coordinates of the defect which may possibly be detected to be determined, the number of the photodiode which has been excited providing the abscissae and the tachometer the ordinates, the same information also enabling the frequency of sweep of the networks of photodiodes (3), which is necessary for the whole of the sheet (1) to be checked in the same fashion, to be determined whatever the speed at which it passes by.

7. An assembly as in Claim 6, characterized by a marking member (17) which is piloted by the information about coordinates thus provided and ensures the physical determination of the location of the defect in the sheet (1), and which consists of a carriage moving along a guide occupying the whole width of the sheet, its movement being controlled by a motor having high starting and braking torque, which receives the information about abscissae determined by the number of the diode which has been excited by the corresponding defect, the triggering of the marking itself being effected according to the ordinates determined by the information provided by the tachometer, these two items of information being stored at the instant of detection of the defect, information about speed enabling triggering at the instant of the defect's passing underneath the marking member which includes a solid body capable of leaving a visible mark upon the surface being checked, the marking member or members so formed being lowered into contact with the surface (1) at the instant determined for the marking.

8. An assembly as in Claim 4, characterized by the fact that the linear opening in each box containing each source (6) of light is subjected to the action of a blast of compressed air intented to avoid each of the said sources becoming clogged with dust.

9. An assembly as in one of the Claims 7 or 8, characterized by the fact that the electrical signals provided by each of the photodiodes of the network or networks of photodiodes (3) are addressed after amplification to a comparator (26) which receives furthermore and separately the information from the « light threshold » and that from the « defects threshold », which enables « light data » and « defects data » to be obtained, which are put separately into store and analysed by a second computer comprising live stores and fixed stores and called the detector computer (23) which as a function of the outside instructions received from any dialogue peripheral (27) provides results which, filtered of any interference by an emission-reception station (31) which also receives the information from the tachometer (16), are addressed to the first computer called the decision computer (21) which issues the orders adequate to each member of the machine such as the power amplifier (32) for regulating the intensity of illumination from the sources (6) with a view to maintaining the constancy of the « light threshold », to the electronic systems for regulation of the frequency of sweep by the photodiodes across the width of the image which they are checking as a function of the speed information provided by the tachometer (16), and to the system for triggering the marking member or members as a function of the coordinates of the possible defect, the stepping motors (12) intended for keeping constant the distance kx of the network of photodiodes (3) with respect to the image of the source of light as well as its parallelism with respect to the latter, being controlled by the second computer (23).

10. An assembly as in Claim 9, characterized by the fact that an electronic mask is provided, which automatically blinds the photodiodes corresponding with the image of a predetermined width of each of the edges of the sheet (1) whatever this width may be, so as not to take into account as a defect the image of the edge of the sheet as such, which is not always straight, nor the tracks of the driving rollers that the borders include.

11. An assembly as in Claim 10, characterized by the fact that when there exists the zone (13) of overlap between the zones of illumination from a number of sources of light, the possible signal of a defect given by the first network reached is put into store and the excitation of the corresponding diode or diodes of the second network in the direction of travel, corresponding with the same zone of overlap, is inhibited until the instant of the same defect passing by at the level of this or these diodes, in order that this second signal shall not make a useless repetition of the first one already emitted concerning this same defect.

12. An assembly as in one of the Claims 5 to 11, characterized by the fact that the source or sources (3) of light consist of as many fluorescent tubes fed as 25 kHz in order to ensure perfect continuity of the phenomenon because of the slight remanence of the fluorescent tube.

13. An assembly as in Claim 12, characterized by the fact that for the special checking of the sheet when it is a question of sheets of glass (38) which have been cut out as specially intended for the manufacture, for example, of laminated or dipped windscreens, where the checking should not be limited to the defects, even minute ones, which is enabled by checking under a « mixed field », but should be pursued as far as the detection of dirt which may persist in spite of previous washing, in order that the sheet of glass (38) shall be stripped of any defect or dirt at the time of lamination or dipping, each device includes in addition an intense source (37) of light, situated underneath the sheet of glass and an upper source (39) of light, functioning by reflection, these two complementary sources of light being in turn linear and simultaneously parallel with the horizontal plane of the sheet of glass (38) and with the vertical plane containing the optical axis and the network of photodiodes (3), and their respective distances $x'$ and $x''$ from the latter plane being such that each of them is lying at the lower limits of the « mixed field » next to the « dark field ».

14. An assembly as in Claim 13, characterized by the fact that the tachometer (16) is in this case integral with a roller (40) carrying the sheet of glass which is to be checked.

15. An assembly as in Claim 14, characterized by the fact that the bevelled edge of the sheet of glass (38) considered as a defect by the network or networks of photodiodes (3) enables the length of the said sheet of glass (38) to be determined accurately, and hence the accurate coordinates to be determined with respect to its area and taking into account the information from the tachometer (16), of the possible defect or dirt within the frame of the area of the sheet of glass (38), as well as a peripheral zone to be created, which may be masked if it is useful not to proceed with detection in the area of it.

**Patentansprüche**

1. Verfahren zur Untersuchung von transparenten Bandmaterialien während des Vorbeilaufs, um die Fehlstellen des Materials aufzudecken und um einerseits die Fehler und andererseits die auf dem genannten transparenten Bandmaterial abgelagerten Fremdkörper zu unterscheiden, wobei eine Seite des genannten transparenten Bandmaterials (1) mittels einer Lichtquelle (6) beleuchtet wird, man jenseits der anderen Seite des Bandes einen Photodetektor (3) und zwischen dem Band und dem Photodetektor ein konvergentes optisches System (2) plaziert, und wobei die Lichtquelle (6) bezüglich der optischen Achse des Photodetektors versetzt ist,
dadurch gekennzeichnet, daß die genannte Lichtquelle (6) ein Strahlenbündel mit kleinem Öffnungswinkel und geringer Intensität aufweist und ein diffuses Licht ausstrahlt ;
daß man mittels des optischen Systems (2), dessen optische Achse senkrecht zur Ebene des Bandes angeordnet ist, das reelle scharfe Bild der Lichtquelle (6) in einer imaginären Ebene abbildet, die sich zwischen dem Photodetektor (3) und dem optischen System (2) befindet ;
daß man den genannten Photodetektor (3) an der Stelle aufstellt, wo sich mittels desselben optischen Systems (2) das reelle scharfe Bild des genannten Bandes (1) bildet, derart, daß die genannte optische Achse sich von der Lichtquelle (6) in einer Entfernung x befindet, so daß er ständig einen Streifen des reellen Bildes der genannten Lichtquelle erhält, das sich in der imaginären Ebene scharf und auf seiner Höhe unscharf abbildet ;
daß man die Stärke der Lichtquelle (6) regelt, damit die konstante Lichtmenge, « Lichtschwelle » genannt, die vom Photodetektor (3) empfangen wird, immer unter der Reizschwelle, « Fehlerschwelle » genannt, für das Auslösen des Analysensystems bleibt, das die vom Photodetektor (3) ausgestrahlten Signale empfängt und verarbeitet ;
daß die genannte Fehlerschwelle erreicht und überschritten wird, wenn ein Fehler vorbeizieht, der ein Abweichen des Strahlenbündels durch Brechung hervorruft, was die Bildung eines hellen scharfen Bildes des genannten Fehlers auf dem Photodetektor (3) oberhalb des unscharfen, von ihm ständig teilweise empfangenen Bildes herbeiführt, was die Abgabe eines Signals hervorruft, das von entsprechenden Geräten aufgenommen und weiterverarbeitet wird ;
und daß das Vorbeiziehen eines lichtundurchlässigen Gegenstandes, der lediglich auf dem Band abgelagert ist, durch seine Lichtundurchlässigkeit selbst nur ein Verblassen des reellen Bildes hervorruft, das teilweise vom Photodetektor ständig empfangen wird, dessen Erregung in diesem Fall unter der konstanten « Lichtschwelle » bleibt.

2. Verfahren gemäß Anspruch 1, dadurch gekennzeichnet, daß die optimale Stellung der Lichtquelle (6) in bezug auf die optische Achse des Photodetektor-Systems (3) so ist, daß in diesem Punkt die optische Verstärkung, dargestellt durch Go = (dAo)/(dx), optimal ist, wobei Ao die Amplitude des vom Detektorgerät (3) ausgestrahlten Signals ist, und wobei die genannte Stellung des Detektors in bezug auf die Lichtquelle definiert ist als der Bereich des « Mischfeldes » zwischen dem sogenannten Bereich des « hellen Feldes », das ein Maximum an Beleuchtung aufweist, und dem sogenannten Bereich des « schwarzen Feldes », wo die lichtundurchlässigen Körper, die einer Lichtausstrahlung ausgesetzt sind, die Wirkung der Beugung hervorrufen.

3. Vorrichtung zur Ausführung des Verfahrens gemäß allen vorangegangenen Ansprüchen, bei der die Lichtquelle (6), die sich unter der zu kontrollierenden transparenten Fläche, die vorbeiläuft, befindet, schwach und linear sowie parallel zur Horizontalebene der genannten Fläche und gleichzeitig parallel zur Vertikalebene ist, die die optische Achse des optischen Systems (2) aufweist, wobei der Photodetektor aus einem linearen Netz von Photodioden (3) besteht und sich letztlich in bezug auf diese Vertikalebene in einer gewissen Entfernung x befindet, dadurch gekennzeichnet, daß die Lichtquelle in bezug auf die Richtung des Vorbeilaufens der genannten Fläche in einem Winkel von 45° steht, und dadurch, daß die genannte Entfernung x derart ist, daß das genannte Netz von Photodioden sich in äußerer Berührung mit dem äußersten Streifen eines reellen unscharfen Bildes der Lichtquelle (6) befindet, das von dem optischen System (2) in der Ebene des Photodiodennetzes (3) wiedergegeben wird, das selbst in der Horizontalebene angeordnet ist, auf die das reelle scharfe Bild der Fläche und jedes Fehlers, den sie aufweisen kann, projiziert wird, wobei die reziproken Längen und Stellungen der Lichtquelle (6) und des Photodiodennetzes so sind, daß das reelle unscharfe Bild, das das optische System (2) von der Lichtquelle (6) in der Ebene des Netzes (3) wiedergibt, die Länge des genannten Netzes abdeckt, wobei das zyklische Abtasten der gesamten Oberfläche des Bandes eine elektronisch von einem ersten Computer auferlegte Abtastfrequenz aufweist, und wobei das Photodiodennetz selbst eine geeignete Testperiode von Diode zu Diode in Abhängigkeit von dieser Frequenz besitzt.

4. Vorrichtung nach Anspruch 3, dadurch gekennzeichnet, daß, damit die Entfernung x mit äußerster Präzision unverändert sowie die Parallelität der Lichtquelle (6) zu dieser Vertikalebene vollkommen bleiben, um die optische Leistung auf der ganzen Länge des Detektornetzes ständig optimal zu halten, das Photodiodennetz (3) auf einer Platte (9) angebracht wird, die mit zwei kreisförmigen Zahnsegmenten (10) versehen ist, die sich diametral entgegengesetzt auf beiden Seiten des Photodiodennetzes befinden und entweder gleichzeitig oder voneinander getrennt mit gleichen oder verschiedenen Geschwindigkeiten und in der gleichen Richtung oder entgegengesetzt mittels Förderschnecken (11) beaufschlagt werden, und zwar schrittweise, durch zwei Motore (12), die unabhängig voneinander gemäß der von jeder der Photodioden erhaltenen Lichtmenge gesteuert werden, derart, daß das genannte Netz automatisch parallel zu sich selbst oder im Winkel verschoben wird und sogar die beiden Bewegungen gleichzeitig ausführen kann, so daß es sich gemäß ihrer Resultierenden mit einem Maximalwert kx verschiebt, wobei k der Verkleinerungskoeffizient des optischen Systems ist.

5. Anordnung aus mehreren Vorrichtungen nach einem der Ansprüche 3 oder 4, wenn das auf das Photodiodennetz (3) einer dieser Vorrichtungen projizierte reelle scharfe Bild der Breite der transparenten Fläche größer als dieses Netz ist, dadurch gekennzeichnet, daß der gegenseitige Standort jeder Vorrichtung an den ihnen gemeinsamen Grenzen einen Bereich der Überlappung (13) jeder Lichtquelle (6) beinhaltet, um jede Unterbrechung zwischen ihnen zu vermeiden.

6. Anordnung nach Anspruch 5, dadurch gekennzeichnet, daß ein Geschwindigkeitsmesser (16), der die Information bezüglich der Geschwindigkeit des Vorbeiziehens des Bandes liefert, es erlaubt, die Koordinaten des eventuell entdeckten Fehlers festzustellen, wobei die Nummer der erregten Photodiode die Abszissen und der Geschwindigkeitsmesser die Ordinaten liefert, wobei es die gleiche Information außerdem erlaubt, die Frequenz des Abtastens der Photodiodennetze (3) festzulegen, die notwendig sind, um die ganze Fläche des Bands (1) auf die gleiche Art zu kontrollieren, egal wie groß seine Durchlaufgeschwindigkeit ist.

7. Anordnung nach Anspruch 6, gekennzeichnet durch ein Markierungselement (17), das durch die so gelieferten Koordinaten-Informationen gesteuert wird und das die materielle Feststellung der Lage des Fehlers auf dem Band (1) sicherstellt, aus einem Wagen besteht, der sich auf einem Führungselement verlagert, das die ganze Breite des Bands einnimmt, wobei seine Verschiebung durch einen Motor mit verstärktem Anlauf- und Bremsmoment gesteuert wird, der die Abszisseninformationen durch die Nummer der Diode erhält, die von dem entsprechenden Fehler erregt wurde, wobei die Auslösung der Markierung selbst gemäß den Ordinaten geschieht, die durch die Informationen, die der Geschwindigkeitsmesser liefert, festgelegt sind, wobei diese beiden Informationen im Moment der Feststellung des Fehlers gespeichert werden, und wobei die Geschwindigkeitsinformation das Auslösen im Moment des Vorbeiziehens des Fehlers unter dem Markierungsgerät ermöglicht, das einen festen Körper aufweist, der eine sichtbare Markierung auf der kontrollierten Fläche hinterlassen kann, wobei das oder die so beschaffenen Markierungsorgane sich absenken, bis sie die Fläche (1) im für die Markierung festgelegten Moment berühren.

8. Anordnung nach Anspruch 14, dadurch gekennzeichnet, daß die gradlinige Öffnung jedes Behälters, der jede Lichtquelle (6) enthält, einem Druckluftgebläse ausgesetzt ist, das zur Verhinderung der Verstaubung jeder dieser Quellen bestimmt ist.

9. Anordnung nach einem der Ansprüche 7 oder 8, dadurch gekennzeichnet, daß die elektrischen Signale, die von jeder der Photodioden das Photodiodennetzes oder der Photodiodennetze (3) ausgehen, nach Verstärkung einem Komparator (26) weitergegeben werden, der außerdem und getrennt davon die Information der Lichtschwelle und die der Fehlerschwelle erhält, wodurch es möglich wird, « Lichtwerte » und « Fehlerwerte » zu erhalten, die von einem zweiten Computer getrennt gespeichert und analysiert werden können, der lebende oder tote Speicher aufweist und Empfangscomputer (23) genannt wird und der, abhängig von Außeninformationen, die von jeder Dialogperipherie (27) erhalten werden, Resultate liefert, die, von jeder Störung durch ein Sende-Empfangsgerät (31) gefiltert, das auch die Information des Geschwindigkeitsmessers erhält, zum ersten Computer (21), genannt Entscheidungscomputer, weitergeleitet werden, der die entsprechenden Befehle an jedes Maschinenelement weitergibt, wie an den Leistungsverstärker (32), um die Beleuchtungsstärke der Lichtquellen (6) zu regeln und damit die « Lichtschwelle » konstant zu halten, an die elektronischen Regeleinrichtungen für die Frequenz des Abtastens der Breite des Bildes durch die Photodioden, das dieselben abhängig von der vom Geschwindigkeitsmesser (16) gelieferten Geschwindigkeitsinformation kontrollieren, und an die Markierungseinrichtung gemäß den Koordinaten des eventuellen Fehlers, wobei die Schrittmotore (12), die die Entfernung kx des Photodiodennetzes (3) in bezug auf das Bild der Lichtquelle sowie eine Parallelität in bezug auf diese aufrechterhalten sollen, vom zweiten Computer (23) gesteuert werden.

10. Anordnung nach Anspruch 9, dadurch gekennzeichnet, daß eine elektronische Abdeckmaske vorgesehen ist, um die Photodioden automatisch blind werden zu lassen, die einer Bildbreite entspricht, die von beiden Seiten des kontrollierten Bands (1) festgelegt ist, egal um welche Breite es sich handelt, so daß weder das Bild des Bandrandes selbst, der nicht immer gradlinig ist, als Fehler gewertet wird noch die Spuren der Antriebsräder, die sich auf den Rändern befinden.

11. Anordnung nach Anspruch 10, dadurch gekennzeichnet, daß, wenn eine Überlappungsfläche (13) zwischen den von mehreren Lichtquellen beleuchteten Flächen existiert, das eventuelle Fehlersignal, das das erste erreichte Netz abgibt, gespeichert wird, und die Erregung der entsprechenden Diode oder der entsprechenden Dioden des zweiten Netzes in Richtung des Vorbeilaufs, das der gleichen Überlappungsfläche entspricht, verhindert wird bis zu dem Moment, wo der gleiche Fehler in der Höhe dieser Diode oder dieser Dioden vorüberzieht, damit dieses zweite Signal gegenüber dem ersten Signal, das schon wegen desselben Fehlers abgegeben worden ist, nicht zur Doppelanzeige führt.

12. Anordnung nach einem der Ansprüche 5 bis 11, dadurch gekennzeichnet, daß die Lichtquelle oder die Lichtquellen (3) aus soviel Leuchtröhren besteht bzw. bestehen, deren Versorgung unter 25 KHz liegt, daß eine vollkommene Kontinuität des Vorgangs aufgrund der geringen Remanenz der Leuchtröhre gewährleistet ist.

13. Anordnung nach Anspruch 12, dadurch gekennzeichnet, daß für die besondere Kontrolle von geschnittenen Glasbändern (38), die insbesondere für die Herstellung von z. B. Windschutzscheiben, laminiert oder gehärtet, vorgesehen sind, wobei sich diese Kontrolle nicht auf Fehler, selbst kleinste, beschränken darf, die die Kontrolle unter « Mischfeld » erlaubt, sondern bis zur Entdeckung von Schmutz, der trotz der vorherigen Wäsche übrigbleiben konnte, getrieben werden muß, damit die Glasscheibe bei der Laminierung oder Härtung von jedem Fehler oder Schmutz befreit ist, jede Vorrichtung außerdem eine intensive Lichtquelle (37) aufweist, die unter dem Glasband angebracht ist, und eine oberhalb gelegene Lichtquelle (39), die durch Reflexion arbeitet, wobei diese beiden komplementären Lichtquellen selbst linear und gleichzeitig parallel sowohl zur Horizontalebene des Glasbandes (38) als auch zur Vertikalebene sind, die die optische Achse und das Photodiodennetz (3) enthält, und wobei ihre jeweiligen Entfernungen x' und x'' zu dieser letzten Ebene derart sind, daß alle beide sich an den unteren Grenzen des « Mischfeldes » an der Seite des « schwarzen Feldes » befinden.

14. Anordnung nach Anspruch 13, dadurch gekennzeichnet, daß der Geschwindigkeitsmesser (16) in diesem Fall mit einer Tragrolle (40) für das zu kontrollierende Glasband fest verbunden ist.

15. Anordnung nach Anspruch 14, dadurch gekennzeichnet, daß der geschliffene Rand des Glasbandes (38), der von dem oder den Photodiodennetzen (3) als Fehler betrachtet wird, es ermöglicht, die Länge des genannten Glasbands (38) genau zu bestimmen, demnach in bezug auf seine Fläche und unter Berücksichtigung der Informationen des Geschwindigkeitsmessers (16) die genauen Koordinaten des eventuellen Fehlers oder Schmutzes im Bereich der Oberfläche des Glasbandes festzulegen sowie eine periphere Zone zu schaffen, die abgedeckt werden kann, falls es sich als nützlich erweisen sollte, auf ihrer Fläche keine Fehlererkennung durchzuführen.

Fig. 1

Fig. 2

A          B

*Fig 3*

A          B

*Fig. 4*

*Fig. 5*

Fig 6

Fig. 7

Fig. 8

Fig. 9

Fig. 10

4

## Fig.11

## Fig.12

Fig. 13

Fig. 15

## Fig.14

Fig. 16

Fig 17

Fig. 18